# EUROPEAN PATENT APPLICATION

(11) **EP 0 778 703 A2**
(43) Date of publication of application: **11.06.1997**
(21) Application number: 97100514.5
(22) Date of filing: 24.03.1993
(51) Int. Cl.: H04N 5/926, H04N 5/783

(54) **Variable length code recording/playback apparatus**

(30) Priority: 24.03.1992 JP 66370/92; 24.03.1992 JP 66369/92; 25.03.1992 JP 67609/92; 25.03.1992 JP 67611/92
(62) Divisional of application: 93302250.1
(71) Applicant: KABUSHIKI KAISHA TOSHIBA, Kawasaki-shi, Kanagawa-ken 210 (JP); TOSHIBA AVE CO., LTD, Minato-ku, Tokyo 105 (JP)
(72) Inventor: Shimoda, Kenji, 1-1-1 Shibaura, Minato-ku Tokyo (JP); Abe, Shuji, 1-1-1 Shibaura, Minato-ku Tokyo (JP)
(74) Representative: O'Connell, David Christopher

(57) **Abstract**

A variable length code recording/playback apparatus, which by encoding intra-frame data and inter-frame data in variable length code, records them as recorded codes on tracks of a prescribed recording medium and playbacks them, includes a data rearranger for recording the data in areas of the tracks to be played back at specific high speed playbacks, and means for limiting the length of the data to be stored depending on the size of the areas.

## Description

The present invention relates generally to a variable length code recording/playback apparatus, and more particularly, to a variable length code recording/playback apparatus, which is capable or maintaining a predetermined picture quality for a plurality of specialized mode playback.

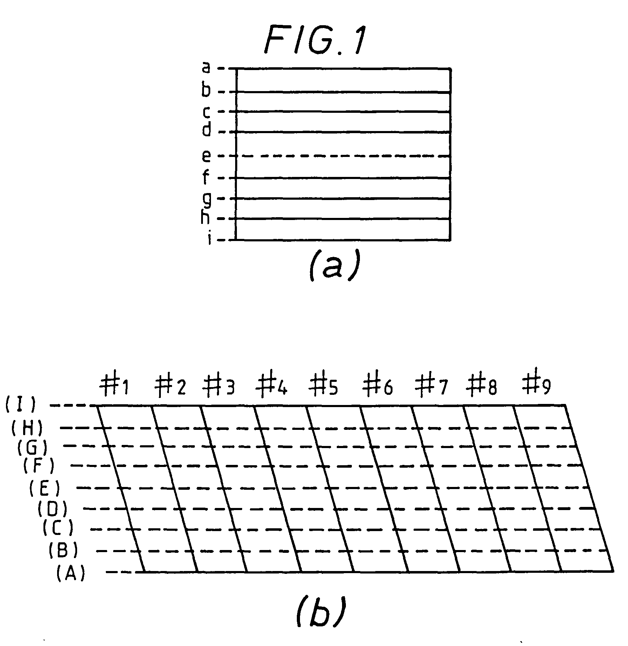

A digital precessing of video data has been greatly progressed in recent years. In particular, various systems for recording digital video data on a magnetic video cassette recorder (VCR) have been progressed. FIGURE 1 is a diagram for explaining relations of the locations on a screen and the locations on the recording tracks of a recording medium in VCRs. FIGURE 1(a) illustrates the locations on the screen and FIGURE 1(b) illustrates the locations on the recording tracks.

FIGURE 1(a) shows one frame of picture vertically divided into eight sections. FIGURE 1(b) illustrates the record locations of the first through ninth tracks similarly divided into eight tracks. Video data are sequentially recorded on a recording medium starting from the lowest line A of the first track to its top line I, For instance, when recording one frame data on one track, data displayed in a horizontal section defined by lines a and b on a screen are recorded on a longitudinal section defined by lines A and B on a recording medium, and thereafter, in the similar manner data displayed in horizontal sections defined by lines b through i on the screen are sequentially recorded on longitudinal sections defined by lines B through I on the recording medium. Further, for instance, when recording one frame data on two tracks, data in the horizontal section defined by the lines a and e on the screen are recorded on the longitudinal section defined by the lines A and I of the first track #1 while data in the horizontal section defined by the lines e and i on the screen are recorded on the longitudinal section defined by the lines A and I of the second track #2.

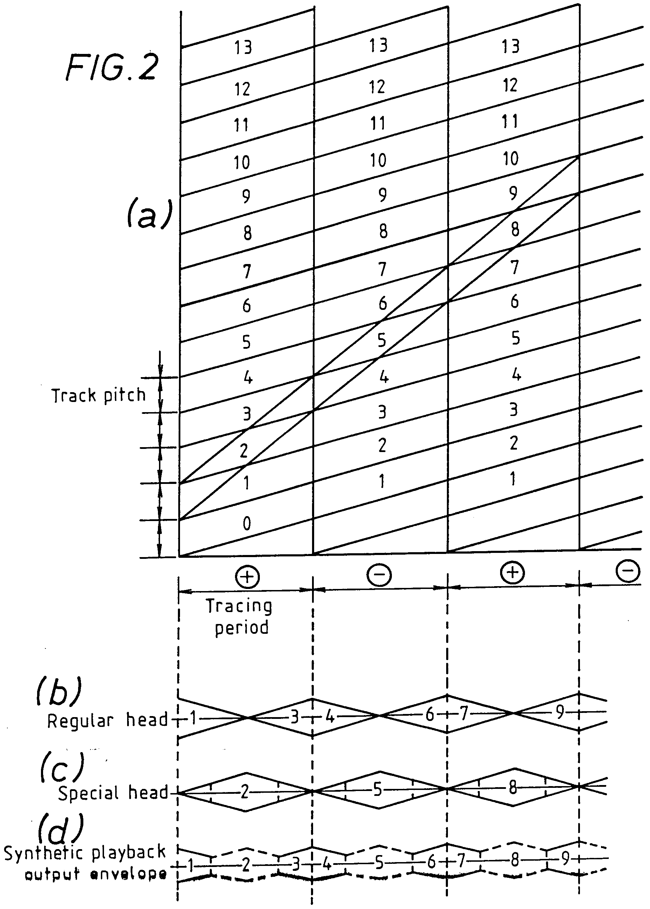

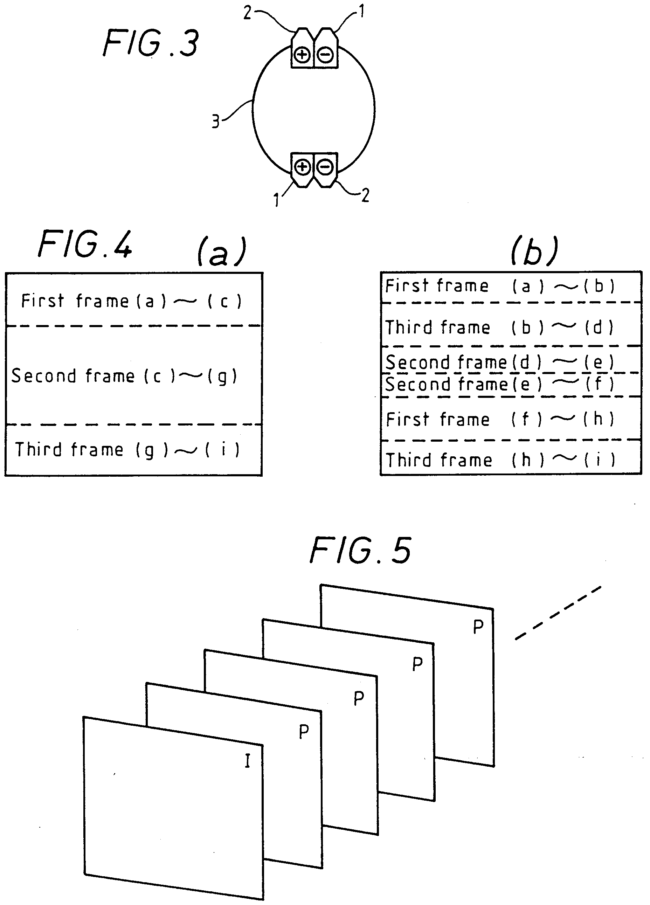

FIGURE 2 is in explanatory diagram showing the relationship between trace patterns and playback signal envelopes at the triple-speed mode playback. FIGURE 2(a) shows trace patterns at the triple-speed mode playback with a tracing period shown at the axis of abscissas and track pitch or tape traveling distance at the axis of ordinates. The signs "+" and "-" in the diagram represent the regular azimuths of the playback head, respectively. Further, numerals in the diagram show track numbers; odd number tracks are in the plus azimuth and even number tracks are in the minus azimuth. FIGURES 2(b) through 2(d) illustrate the signal envelope played back by the regular head, the playback output envelope by the special head and the synthetic playback output envelope obtained by both heads. FIGURE 3 is an explanatory diagram showing the construction of the recording/playback heads.

Now assumed that a rotary cylinder 3, as shown in FIGURE 3, is used in the data recording and playback operations. The rotary cylinder 3 is provided with a pair of the regular heads 1 which have mutually different azimuths and a pair of the special heads 2 which have mutually different azimuths, and the azimuths of the regular head 1 and its adjacent special head 2 also differ each other. As shown by the sign "+" in FIGURE 2(a), the first track and the third track are traced by the regular head 1 of the plus azimuth in the initial tracing period, and the fourth track and the sixth track are traced by the regular head 1 of the minus azimuth in the next tracing period. Thus, the playback signal envelope shown in FIGURE 2(b) is obtained by the regular head 1. Further, the second track is traced by the special head 2 in the initial tracing period and the playback signal envelope shown in FIGURE 2(c) is obtained in the same manner. By combining the playback output from the regular head 1 with the playback output from the special head 2, the synthetic playback output envelope shown in FIGURE 2(d) is obtained.

The table 1 shown below represents relations among the playback outputs at the triple-speed mode playback (FIGURE 2(d)), the tracing locations and the locations on the screen.

**Table 1**

| Playback Track | 1 Frame/1 Track | | 1 Frame/2 Tracks | |
|---|---|---|---|---|
| | Track | Frame | Track | Frame |
| 1 | #1 (A) - (C) | 1st Frame (a) - (c) | #1 (A) - (C) | 1st Frame (a) - (b) |
| 2 | #2 (C) - (G) | 2nd Frame (c) - (g) | #2 (C) - (G) | 1st Frame (f) - (h) |
| 3 | #3 (G) - (I) | 3rd Frame (g) - (i) | #3 (G) - (I) | 2nd Frame (d) - (e) |
| 4 | #4 (A) - (C) | 4th Frame (a) - (c) | #4 (A) - (C) | 2nd Frame (e) - (f) |
| 5 | #5 (C) - (G) | 5th Frame (c) - (g) | #5 (C) - (G) | 3rd Frame (b) - (d) |
| 6 | #6 (G) - (I) | 6th Frame (g) - (i) | #6 (G) - (I) | 3rd Frame (h) - (j) |
| 7 | #7 (A) - (C) | 7th Frame (a) - (c) | #7 (A) - (C) | 4th Frame (a) - (b) |
| 8 | #8 (C) - (G) | 8th Frame (c) - (g) | #8 (C) - (G) | 4th Frame (f) - (h) |
| 9 | #9 (G) - (I) | 9th Frame (g) - (i) | #9 (G) - (I) | 5th Frame (a) - (b) |

As shown in FIGURE 2(d) and Table 1, data A through C on the first track #1 are reproduced by the regular head 1 in the first 1/4 time interval in the initial tracing period, data of C through G on the second track #2 are reproduced by the special head 2 in the next 1/2 time, and data of G through I on the third track are reproduced by the regular head ! in the next 1/4 time. Thereafter, data on three tracks are reproduced in the similar manner in one tracing period.

When one frame video data are recorded on one track, the locations of A through C on the first track #1 correspond to the locations a through c on the first frame of image, the locations C through G on the second track #2 correspond to the locations c through g on the second frame of the frame, and the locations G through 1 on the third track #3 correspond to the locations g through i on the third frame of the image, as shown in Table 1. Therefore, at the triple-speed mode playback, the picture patterns at the locations on the first through the third frames are combined and displayed as a playback picture, as shown in FIGURE 4(a).

Further, when one frame video data are recorded on two tracks, the locations A through C on the first track #1 correspond to the locations a and b on the first frame, the locations C through G on the second track #2 correspond to the locations f through h on the first frame, and the locations G through I on the third track #3 correspond to the locations d through e on the second frame as shown in Table 1. Further, the locations A through C on the fourth track #4 correspond to the locations e and f on the second frame, the locations C through G on the fifth track #5 correspond to the locations b through d on the third frame, and the locations G through I on the sixth track #6 correspond to the locations h through i on the third frame. In this case, therefore, the picture patterns at the locations on the first through the third frames are presented in mix on the playback picture, as shown in FIGURE 4(b).

By the way, various proposals have been proposed in recent years for the standardization of high efficient encoding for compressing video data. The high efficient encoding technique is to encode video data at more lower bit rate for improving efficiency of digital transmission and recording. For instance, the CCITT (Comite Consultatif international Telegraphique et Telephonique or International Telegraph and Telephone Consultative Committee) has issued a recommendation for video-conference/video-telephone standardization H.261. According to the CCITT recommendation, the encoding is made by using the frame I processed an intra-frame compression and the frame P processed an inter-frame compression (or a predictive frame compression).

FIGURE 5 is an explanatory diagram for explaining the video data compression according to the CCITT recommendation.

The frame I processed intra-frame compression is the one frame video data encoded by the DCT (Digital Cosine Transformation) process. The inter-frame compression processed frame P is the video data encoded by the predictive encoding method using the intra-frame compression processed frame I or the inter-frame compression processed frame P. In addition, more reduction of bit rate has been made by encoding these encoded data to the data encoded in variable length code data. As the intra-frame compression processed frame I was encoded by the intra-frame information only, it is possible to decode the intra-frame compression processed frame I by a single encoded data only. On the other hand, however, the inter-frame compression processed frame P was encoded using correlations to other video data, thus the inter-frame compression processed frame P being impossible to decode by a single encoded data only.

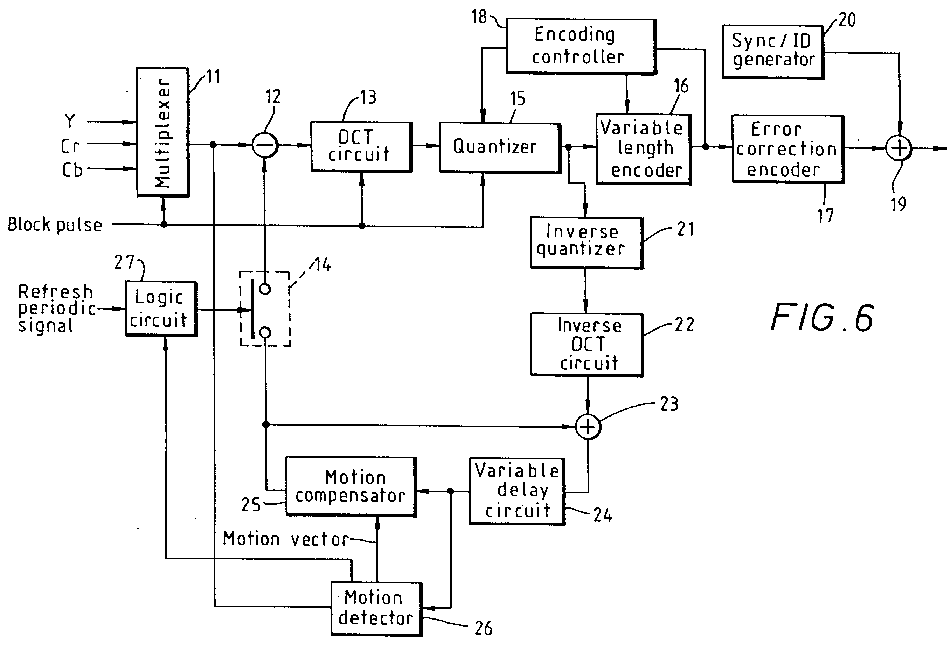

FIGURE 6 is a block diagram showing the recording section of a conventional recording/playback apparatus for variable length code using such the predictive encoding.

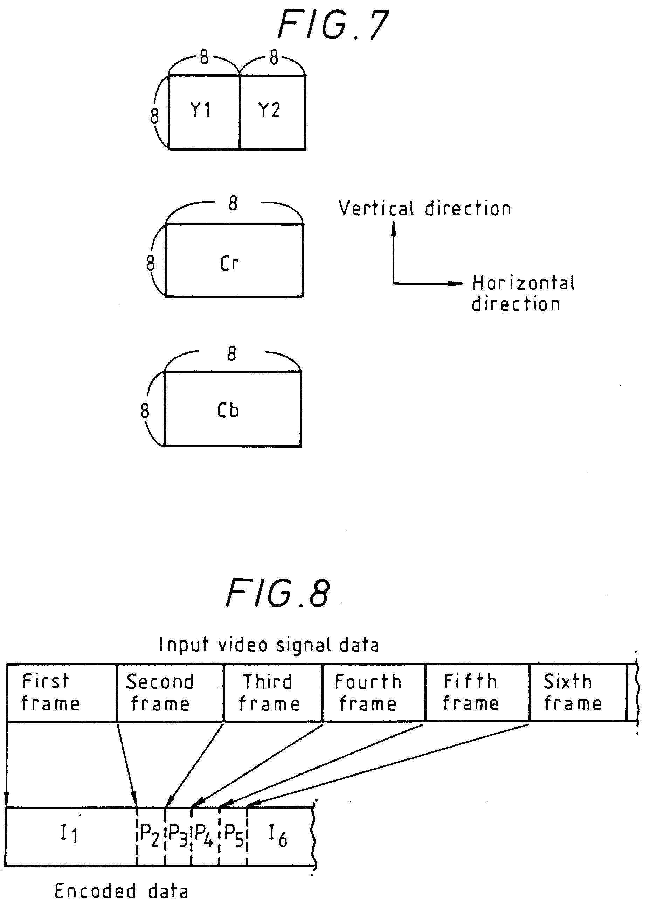

The luminance signal Y and the color difference signals Cr and Cb are applied to a multiplexer 11, where they are multiplexed in block of 8 pixels x 8 horizontal tracing lines. Sampling rate of the color difference signals Cr and Cb in the horizontal direction is a half (1/2) or the luminance signal Y. Therefore, in the period when two 8 x 8 luminance blocks are sampled, one 8 x 8 block of the color difference signals Cr and Cb is sampled. As shown in FIGURE 7, two luminance signal blocks Y and each of the color difference signal blocks Cr and Cb total, thus four blocks in total forms a macro block. Here, two luminance signal blocks Y and each of the color difference block Cr and Cb represent the same location of the picture frame. The output of the multiplexer 11 is applied to a DCT circuit 13 through a subtracter 12.

When performing the intra-frame compression, a switch 14 is kept OFF and the output of the multiplexer 11 is input directly to the DCT circuit 13 as described later. A signal composed of 8 x 8 pixels per block is applied to the DCT circuit 13. The DCT circuit 13 converts the input signal into frequency components by the 8 x 8 two dimensional DCT (Digital Cosine Transformation) process. This makes it possible to reduce the spatial correlative components. The output of the DCT circuit 13 is applied to a quantizer 15 which lowers one block signal redundancy by requantizing the DCT output using a fixed quantization coefficient. Further, block pulses are supplied to the multiplexer 11, the DCT circuit 13, the quantizer 15, etc. which operate in unit of block.

The quantized data from the quantizer 15 is applied to a variable length encoder 16 and is, for instance encoded to the Huffman codes based on the result calculated from the statistical encoding quantity of the quantized output. As a result, a short time sequence of bits is assigned to data having a high appearance probability and a long time sequence of bits to data having a low appearance probability and thus, transmission quantity is further reduced. The output of the variable length encoder 16 is applied to an error correction encoder 17, which provides the output from the variable length encoder 16 with an error correction parity added to a multiplexer 19.

The output of the variable length encoder 16 is also applied to an encoding controller 18. The amount of the output data varies largely depending on input picture. So, the encoding controller 18 monitors the amount of the output data from the variable length encoder 16 and regulates the amount of the output data by controlling the quantization coefficient of the quantizer 15. Further, the encoding controller 18 may restrict the amount of the output data by controlling the variable length encoder 16.

On the other hand, a sync/ID generator 20 generates frame a sync signal and ID signal showing data contents and additional information and provides them to the multiplexer 19. The multiplexer 19 forms one sync block data with a sync signal, an ID signal, a compressed signal data and a parity and provides these data to a recording encoder (not shown). The recording encoder, after recording/encoding the output from the multiplexer 19 according to characteristic of a recording medium, records the encoded data on a recording medium (not shown).

On the other hand, if the switch 14 is ON, the current frame signal from the multiplexer 11 is subtracted from the motion compensated preceding frame, data which will be described later, in the subtracter 12 and applied to the DCT circuit 13. That is, in this case the inter-frame encoding is carried out to encode differential data using a redundancy of the inter-frame picture. When a difference between the preceding frame and the current frame is simply obtained in the inter-frame encoding, it will become large if there is any motion in the picture. So, the difference is made small by compensating the motion by obtaining a difference at the pixel location corresponding to the motion vector while detecting the motion vector by obtaining the location of the preceding frame corresponding to the prescribed location of the current frame.

That is, the output of the quantizer 15 is also applied to an inverse quantizer 21. This quantized output is inverse-quantized in the inverse quantizer 21 and further, inverse DCT processed in an inverse DCT circuit 22 and restored to the original video signal. Further, the original information cannot be played back completely in the DCT processing, requantization, inverse quantization and inverse DCT processing and part of the information lacks. In this case, as the output of the subtracter 12 is a differential information, the output of the inverse DCT circuit 22 is also a differential information. The output of the inverse DCT circuit 22 is applied to an adder 23. This output from the adder 23 is fed back through a variable delay circuit 24 which delays signals by about one frame period and a motion compensator 25, and the adder 23 reproduces the current frame data by adding differential data to the preceding frame data and provides them to the variable delay circuit 24.

The preceding frame data from the variable delay circuit 24 and the current free data from the multiplexer 11 are applied to a motion detector 26 where motion vector is detected. The motion detector 26 obtains motion vector through a full search motion detection by, for instance, a matching calculation. In the full search type motion detection, the current frame is divided into the prescribed number of blocks and the search range of, for instance, 15 horizontal pixels x 8 vertical pixels are set for each block. In the search range corresponding to the preceding frame, the matching calculation is carried out for each block and an inter-pattern approximation is calculated. Then, by calculating the preceding frame block which provides the minimum distortion in the search range, the vector which is obtained by this block and the current frame block is detected as the motion vector. The motion detector 26 provides the motion vector thus obtained to the motion compensator 25.

The motion compensator 25 extracts a corresponding block data from the variable delay circuit 24, compensates it according to the motion vector and provides it to the subtracter 12 through the switch 14 and also, to the adder 23 after making the time adjustment. Thus, the motion compensated preceding frame data is supplied from the motion compensator 25 to the subtracter 12 through the switch 14 and when the switch 14 is ON, the inter-frame compression mode results and if the switch 14 is OFF, the intra-frame compression mode results.

The switch 14 is turned ON/OFF based on a motion signal. That is, the motion detector 26 generates the motion signal depending on whether the motion vector size is in excess of a prescribed threshold value and outputs it to a logic circuit 27. The logic circuit 27 controls the ON/OFF of the switch 14 by the logical judgment using the motion signal and a refresh periodic signal. The refresh periodic signal is a signal showing the intra-frame compression processed frame I shown in FIGURE 5. If the input of the intra-frame compression processed frame I is represented by the refresh periodic signal, the logic circuit 27 turns the switch 14 OFF irrespective of the motion signal. Further, if the motion signal represents that the motion is relatively fast and the minimum distortion by the matching calculation exceeds the threshold value, the logic circuit 27 turns the switch 14 OFF and the intra-frame encoding is carried out for each block even when the inter-free compression processed frame P data are input. Table 2 shown below represents the ON/OFF control of the switch 14 by the logic circuit 27.

**Table 2**

| | | |
|---|---|---|
| Frame I | Intra-Frame Compression Processed Frame | Switch 14 OFF |
| Frame P | Motion Vector Detected Inter-Frame Compression Processed Frame | Switch 14 ON |
| | Motion Vector Unknown Inter-Frame Compression Processed Frame | Switch 14 OFF |

FIGURE 8 is an explanatory diagram showing the data stream of record signals which are output from the multiplexer 19.

As shown in FIGURE 8, the first and the sixth frames of the input video signal are converted to intra-frames I1 and I6, respectively, while the second through the fifth frames are converted to inter-frame compression processed frames P2 through P5. The ratio of data quantity between the intra-frame compression processed frame I and the inter-frame compression processed frame P is (3 - 10) : 1. The amount of data of the intra-frame compression processed frame I is relatively large, while the amount of data of the inter-frame compression processed frame P is extremely reduced. Further, the data of the inter-frame compression processed frame P cannot be decoded unless other frame data are decoded.

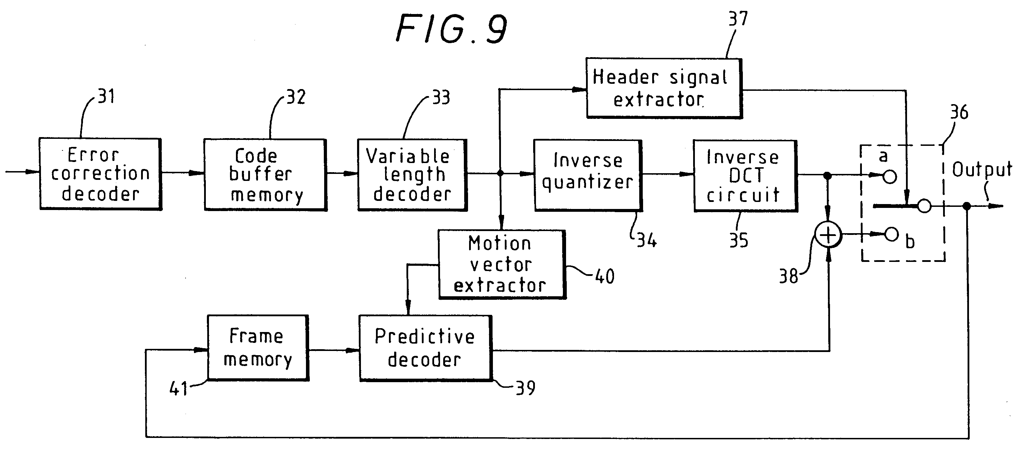

FIGURE 9 is a block diagram illustrating the decoding section(playback section) of a conventional variable length code recording/playback apparatus.

Compressed encoded data recorded on a recording medium is played back by the playback head (not shown) and then input into an error correction decoder 31. The error correction decoder 31 corrects errors produced in a data transmission and a data recording. The playback data from the error correction decoder 31 are applied to a variable length data decoder 33 through a code buffer memory 32 and decoded to prescribed length data. Further, the code buffer memory 32 may be omitted.

The output from the variable length decoder 33 is processed an inverse-quantization in an inverse quantizer 34, and then decoded by an inverse-DCT operation in an inverse DCT circuit 35. The decoded data is then applied to the terminal a of a switch 36. On the other hand, the output of the variable length decoder 33 is also applied to a header signal extractor 37. The header signal extractor 37 retrieves a header showing whether the input data is the intra-frame compression data (intra-frame data) or the inter-frame compression data (inter-frame data) and then provides the header to the switch 36. When supplied with the header shown the intra-frame compression data, the switch 36 selects the terminal a of the switch 36 and thus outputs decoded data from the inverse DCT circuit 35.

The inter-frame compression data is obtained by adding the output from the inverse DCT circuit 35 and the preceding frame output from a predictive decoder 39 using an adder 38. That is, the output of the variable length decoder 33 is applied to a motion vector extractor 40 for obtaining a motion vector. This motion vector is applied to the predictive decoder 39. On the other hand, the decoded output from the switch 36 is delayed for one frame period by a frame memory 41. The predictive decoder 39 compensates the preceding frame decoded data from the frame memory 41 according to the motion vector and provides them to the adder 38. The adder 38 outputs a inter-frame compression data to the terminal b of the switch 36 by adding the output from the predictive decoder 39 and the output from the inverse DCT circuit 35. When the inter-frame compression data is applied, the switch 36 selects the terminal b by the header and thus outputs the decoded data from the adder 38. Accordingly, the compression and expansion are carried out without delay in both of the intra-frame compression mode and the inter-frame compression mode.

However, the intra-frame compression processed frame I and the inter-frame compression processed frame P differ each other in their encoded quantities. If the data stream shown in FIGURE 8 is recorded on a recording medium, one frame is not necessarily able to playback by the playback data at the triple-speed mode playback. Further, the inter-frame compression processed frame P processed by the inter-frame compression will become not able to playback when any undecoded frame is generated as in the triple-speed mode playback, because inter-frame compression processed frame P cannot be decoded as an independent frame.

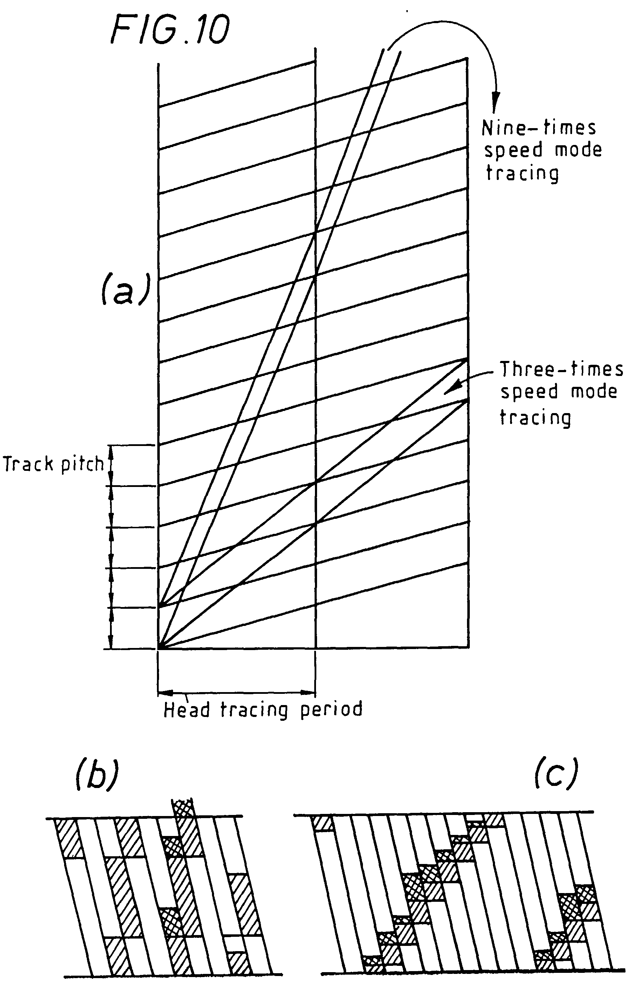

To solve the problems, the applicant of the present application has proposed a method to arrange important data by concentrating them in the Japanese Patent Application (TOKU-GAN-HEI) P02-11745. FIGURE 10 is an explanatory diagram for explaining the method. FIGURE 10(a) shows a trace patterns at a triple-speed mode playback and a nine-times speed mode playback. FIGURE 10(b) shows the recorded state on a tape at the triple-speed mode playback. And FIGURE 10(c) shows the recorded state on a tape at the nine-times speed mode playback. In these diagrams, the hatched sections are the areas to be played back at the triple-speed mode playback (hereinafter referred to as the specific arrange areas).

In this proposal, important data are arranged in the hatched sections shown in FIGURE 10(b) at the triple-speed mode playback, while important data are arranged in the hatched sections shown in FIGURE 10(c) at the nine-times speed mode playback. These hatched sections are the areas which are played back at the triple-speed mode playback and the nine-times speed mode playback, respectively. Further, if the intra-frame data are adopted as important data, they are recorded not only in the specific arrange area but also in other section (the meshed section).

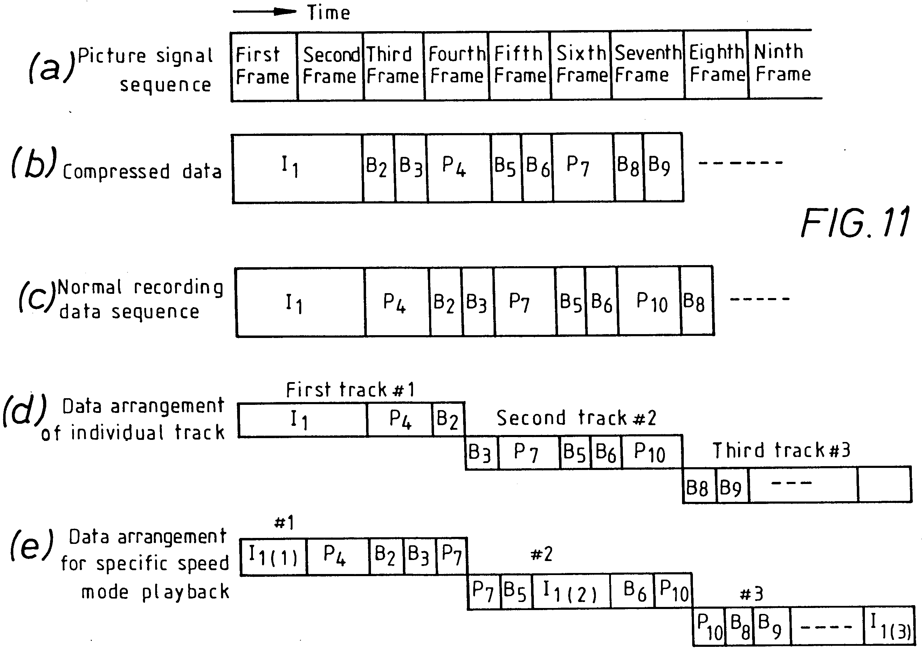

FIGURE 11 is an explanatory diagram for explaining the video data.

Video data are compressed by the compression method presented by the MPEG (Moving Picture Experts Group). Further, for a video telephone/conference, 64 Kbps x n times rate H.261 has been presented and also the still picture compression method has been presented by the JPEG. The MPEG is for semi-moving pictures so that the transmission rate is 1.2 Mbps as adopted for CD-ROM, etc. In the MPEG, data of the first frame, the second frame ..... shown in FIGURE 11(a) are converted to the intra-frame I1, the inter-frame data B2, the inter-frame B3, the intra-frame data P4 ....., as shown in FIGURE 11(b), respectively. Thus, the respective frame data are compressed at different compression rate.

Data shown in FIGURE 11(b) are changed their order in order to facilitate their decoding. That is, as the inter-frame B can be decoded by decoding the inter-frame P, at a recording on a recording medium, the data are supplied to a recording medium or a transmission line after changed in the order of the intra-frame I1, the inter-frame P4, the inter-frame B2, the inter-frame B3 ..... and so on.

In the normal recording, the data shown in FIGURE 11(c) are sequentially recorded on a recording medium. FIGURE 11(d) shows the state of this recording. On the contrary, in the method, the data arrangement is changed as shown in FIGURE 11(e) to make a specific speed mode playback possible. For instance, to make the triple-speed made playback possible, the intra-frame I data are recorded by dividing into the leading end I1(1) of the first track #1, the center I1(2) of the second track #2 and the trailing end I1(3) of the third track #3. Thus, when the hatched sections shown in FIGURE 10(b) are played back, the intra-frame I data are played back.

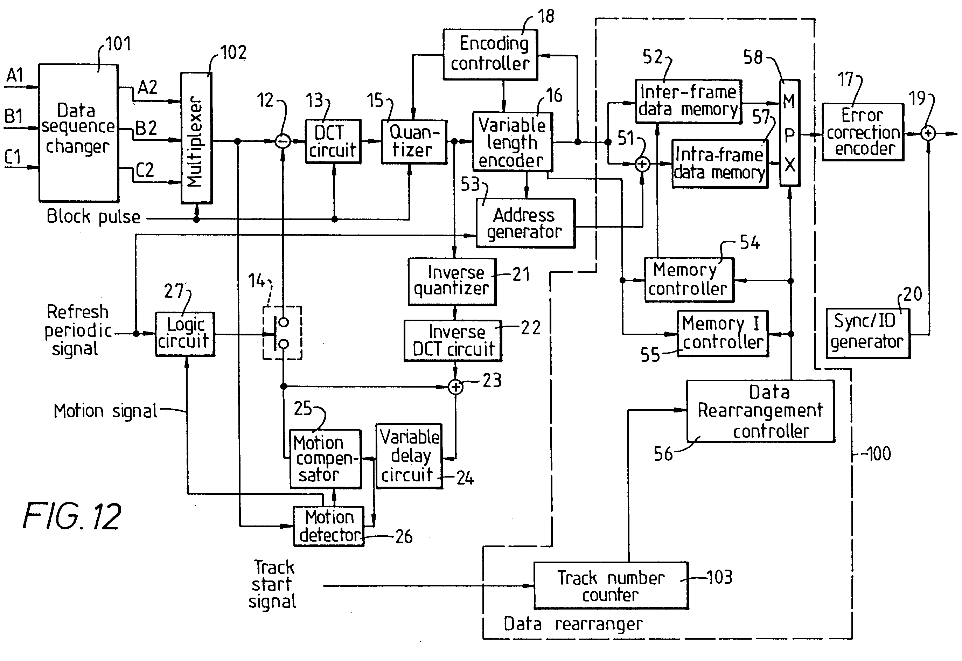

FIGURE 12 is a block diagram showing the construction of the proposed method. The same elements in FIGURE 12 as those in FIGURE 6 are assigned with the same reference numerals and their explanations will be omitted.

A data sequence changer 101 changes the time sequence of input signals A1, B1 and C1 and outputs signals A2, B2 and C2 to a multiplexer 102. The data of the intra-frame I and the inter-frames P and B are given as the input signals A1, B1 and C1. These frame data are composed of the luminance signal Y and color difference signals Cr and Cb, and the multiplexer 102 multiplexes the signals Y, Cr and Cb in time sequence and outputs therefrom.

The output of a variable length encoder 16 is given to an address generator 53 and a data rearranger 100 shown by the broken-line block in addition to a variable length controller 18. The data rearranger 100 is provided for recording important data (in this case, the intra-frame data) on the prescribed location on a tape shown by the oblique line in FIGURE 10. That is, the output of the variable length encoder 16 is separated into the intra-frame data and the inter-frame data, and the inter-frame data are controlled by a memory controller 54 end stored in an inter-frame data memory 52. The address generator 53 generates address showing the correspondence of the output of a variable length encoder 26 and the frame location, and an adder 51 adds the address to the intra-frame data from the variable length encoder 16. An intra-frame data memory 57 is controlled by a memory I controller 55 and stores the output of the adder 51. Further, the adder 51 may add an address to the inter-frame data.

The memory controller 54 and the memory I controller 55 are given with encoding process information from the variable length encoder 16, respectively, and control the write into the inter-frame data memory 52 and the intra-frame data memory 57. On the other hand, when reading from the data memories 52 and 57, the data rearrangement controller 56 rearranges date to obtain a date stream, as shown in FIGURE 11(e), by controlling the memory controller 54, the memory I controller 55 and a multiplexer (hereinafter referred to as MPX) 58. That is, a track number counter 103 is given with a track start signal, for instance, a head switching pulse directing the head switching, etc., and grasping the recording track number, outputs it to the date rearrangement controller 56. For instance, when corresponding to the triple-speed mode playback, the track number counter 103 outputs track numbers #1, #2, and #3 indicating three types of continuous recording tracks in time sequence repeatedly. The data rearrangement controller 56 decides an arrangement of the intra-frame data out of the data from the MPX 58 based on the output from the track number counter 103. For instance, when making the triple-speed mode playback possible, if data indicating the track #1 is given, the data rearrangement controller 56 arranges the outputs from the intra-frame data memory 57 so as to record them on the leading end of the recording track. Similarly, if data indicating the tracks #2 and #3 are given, it arranges the outputs from the intra-frame data memory 57 so as to record them at the center and the trailing end of the recording track.

Thus, the MPX 58, under the control by the data rearrangement controller 56, multiplexes the intra-frame date and outputs them to an error correction encoder 17. The error correction endoder 17 outputs the multiplexed intra-frame data with an error correction parity added to a multiplexer 19. A sync/ID generator 20 generates a sync signal and an ID signal and then output them to the multiplexer 19, which in turn outputs them by adding them to the output of the MPX 58. The output of the multiplexer 19 is recorded on a recording medium through the recording head (not shown).

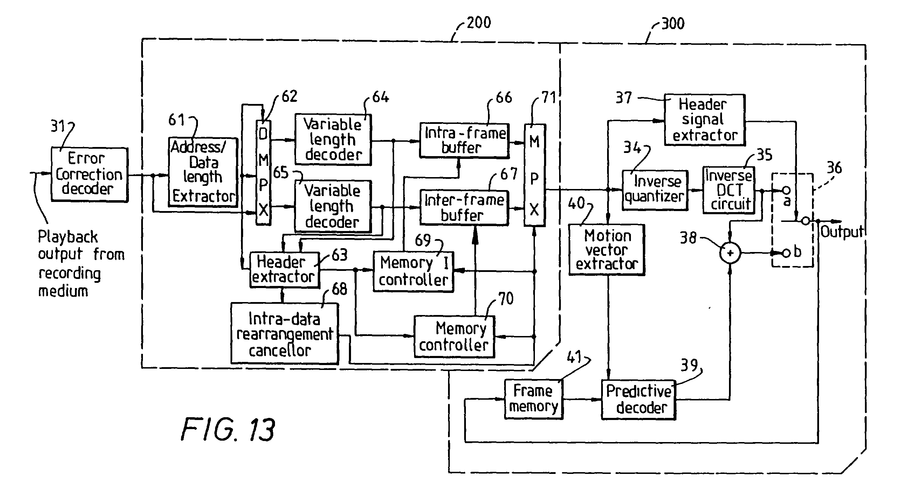

On the other hand, FIGURE 13 is a block diagram showing the playback section. The same elements in FIGURE 13 as those in FIGURE 9 are assigned with the same reference numerals and their explanations will be omitted.

In the playback section, the same decoding operation as that in FIGURE 9 is basically carried out. However, as data have been rearranged at the recording operation, the process to return the data to the original arrangement is added. That is, the playback output from a recording medium (not shown) is demodulated and the error correction is made in an error correction decoder 31 and is then given to an address and data length extractor 61 and a DMPX 62. As the intra-frame data is recorded on the prescribed location on a recording medium according to a prescribe playback speed, it is possible to reproduce the intra-frame by performing the playback at the prescribed playback speed.

The address and data length extractor 61 extracts the address and the data length of the intra-frame data. The DMPX 62 is controlled based on the data length from the address and data length extractor 61 and separating, the intra-frame data and the inter-frame data, outputs them to variable length decoders 64 and 65, respectively. The variable length decoders 64 and 65 decode the input data to prescribed length data and output them to an intra-frame buffer 66 and an inter-frame buffer 67, respectively.

On the other hand, decoded data of the variable length decoders 64 and 65 are also given to a header extractor 63. The header extractor 63 is also given with the output from the address and data length extractor 61 and by generating a signal indicating to restore the time series, outputs it to a memory I controller 69, a memory controller 70 and an intra-frame data rearrangement canceller 68. The intra-frame data rearrangement canceller 68 controls the memory I controller 69, the memory controller 70 and an MPX 71 based on the indicating signal and the header information. Then, the memory I controller 69 and the memory controller 70 control the read/write of the intra-frame buffer 66 and the inter-frame buffer 67, respectively, and then output the intra-frame and the inter-frame data converted to prescribed length data to the MPX 71. The MPX 71 restores the data sequence to the original data sequence before the rearrangment operation and then outputs the data sequence to a circuit block 300 encircled with the broken line. The operation in the block 300 is the same as the process after the reverse quantization process and the decoded output in output from a switch 36.

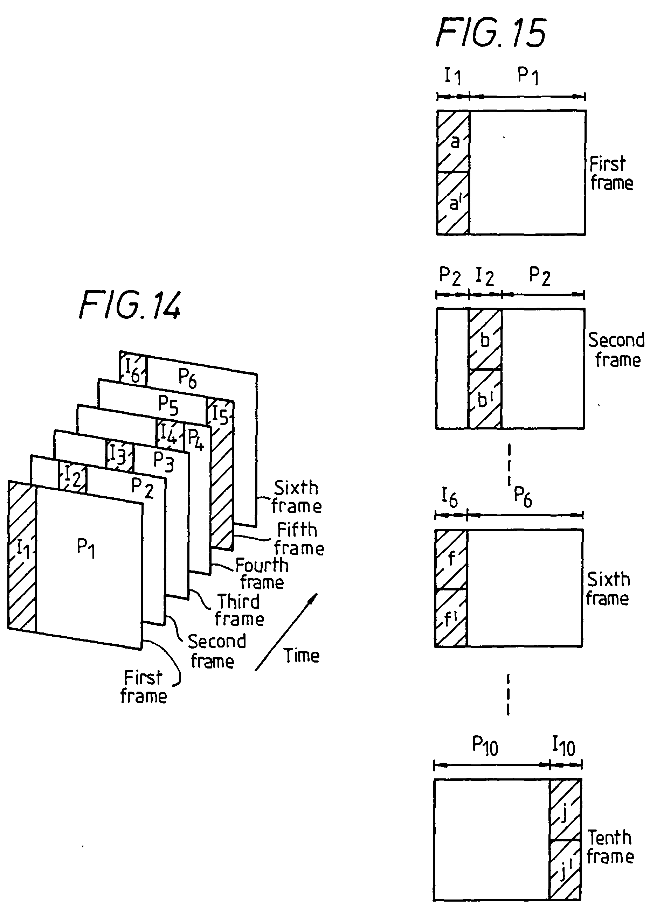

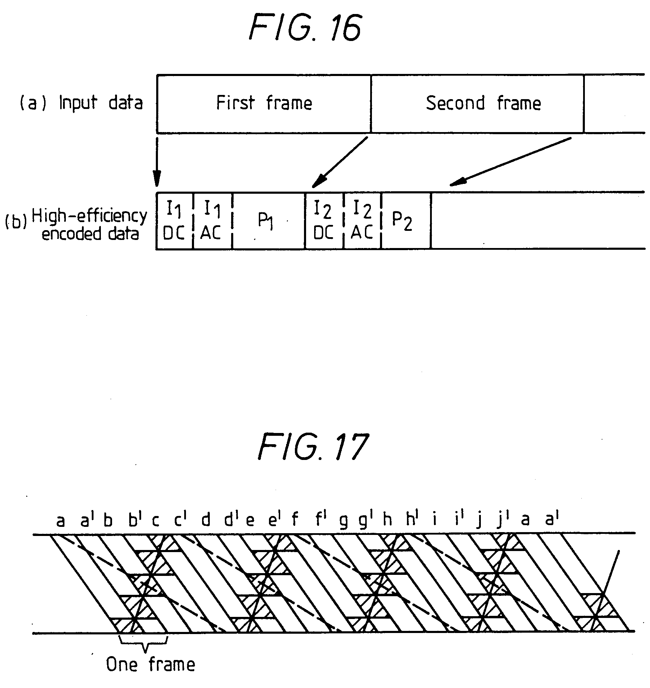

FIGURE 14 is an explanatory diagram for explaining one example of data to be recorded in the specific arrangement area. Further, FIGURE 15 shows the correspondence of the data with the pictures as shown in FIGURE 14, and FIGURE 16 shoes a data stream when the data, as shown in FIGURE 14, are encoded efficiently.

As shown by the hatched sections in FIGURE 14, the intra-frame I is divided into five sections and those divided frame sections I1 through I5 are arranged in the prescribed area of the inter-frame P. Data I1 through I5 correspond to each one of five vertically divided sections, respectively. Now, dividing a frame into two sections vertically and five sections horizontally, the upper areas are assumed to be a(f), b(g), c(h), d(j) and e(j), the lower areas to be a'(f'), b'(g'), c'(h'), d'(i') and e'(j'), and the ten frames are assumed to be one set. Then, as shown in FIGURE 15, the data I1 corresponds to the areas a and a', and the data I2 corresponds to the areas b and b'. Similarly, the data I3 through I10 correspond to the areas c, c' through j, j' on the frame, respectively.

In the first frame, the data I1 of the intra-frame I and the data P1 of the inter-frame P are arranged, while in the second frame the data I2 of the intra-frame I is arranged between the respective inter-frames P2. Similarly, in the third and the fourth frames, the data I3 and I4 of the intra-frame I are arranged between the inter-frames P3s and P4, respectively. Similarly in the fifth frame, the inter-frame P5 and the intra-frame I5 are arranged.

When these data are high efficiently encoded, as shown in FIGURES 16(a) and 16(b), each of the frames is composed of a DC component and an AC component of the intra-frame data and the inter-frame data. Further, the data stream is rearranged so that the intra-frame data are recorded in a specific arrangement area on a recording medium.

Now, when a five-times speed mode playback is made possible, a specific arrangement area will be arranged as shown by the hatched sections in FIGURE 17. If one frame data is to be recorded on two tracks, the intra-frame data I1 is recorded in the specific arrangment areas of the first and the second tracks. That is, as shown in FIGURE 17, the data corresponding to the areas a, a', b, b', c, c', d, d' ..... of the frame are recorded, respectively,

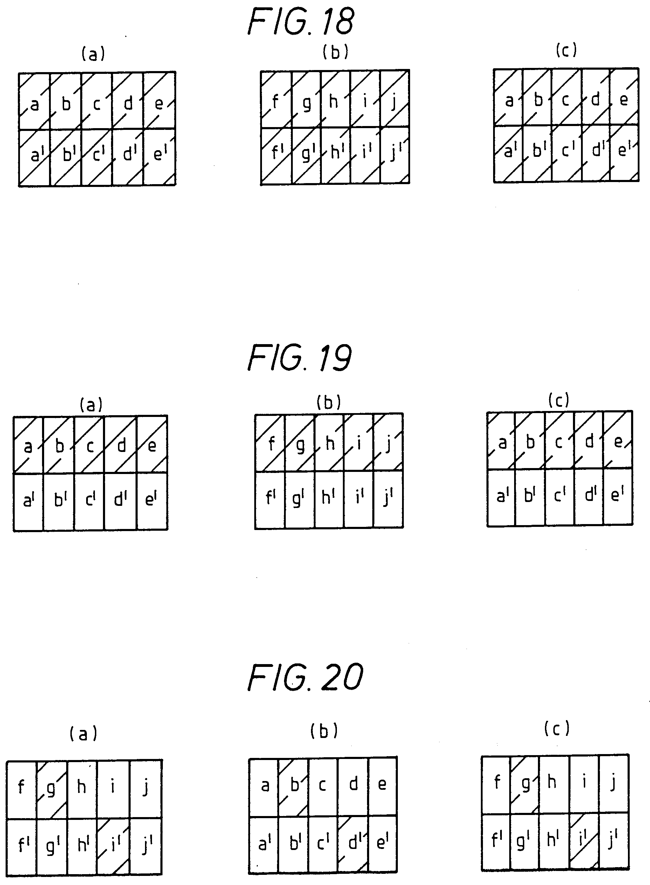

Therefore, at the five-times speed mode playback, the data corresponding to the frame areas a, a', b, b', c, c' ..... are played back successively and one frame is constructed by two tracings, as shown in FIGURE 18(a). In the next two tracings, the data corresponding to the frame areas f, f', g, g' , ..... j, j' are played back successively to form n frames, as shown in FIGURE 18(b). In the next two tracings, one frame is constructed by the data corresponding to the frame areas a, a', ..... e, e', as shown in FIGURE 18(c).

As described above, the playback section shown in FIGURES 12 and 13 obtains a playback picture by playing back at least intra-frame data at a specific speed mode playback. However, there was a problem in that good quality playback pictures couldn't be obtained in reverse direction playbacks. FIGURES 19 and 20 are explanatory diagrams for explaining the problem. FIGURES 19a), 19(b) and 19(c) show constructions of frames played back at a double-speed mode playback, while and FIGURES 20(a), 20(b) and 20(c) show constructions of frames played back at a five-times speed mode playback.

As shown in FIGURES 19(a), 19(b) and 19(c), at the double-speed mode playback the data recorded on two tracks are played back by one tracing and therefore, only one of two adjacent tracks is played back. For instance, as shown by the oblique lines in FIGURE 19(a), if the data corresponding to the frame area a is first played back, the data corresponding to the area b is played back in the next tracing. Therefore, in the next five tracings only data in the areas a through e corresponding to the upper portion of the frame are played back. Further, in the next five tracings only data in the areas f through j corresponding to the upper portion of the frame are played back as shown in FIGURE 19(b) and in the next five tracings only data in the areas a through c are played back, as shown in FIGURE 19(c).

Further, if a reverse direction five-times speed mode playback will be executed, the tracing direction of the magnetic head is as shown by the broken line in FIGURE 17 and the playback is carried out in the order reverse to that at the time of recording. For instance, when the data corresponding to the area i' is played back in the first tracing, the data corresponding to the area g is played back in the next tracing. That is, as shown by the oblique lines in FIGURE 20(a), only data in the frame areas g and i' are played back in two tracings. Further, in the next two tracings, as shown in FIGURE 20(b), only data corresponding to the areas d' and b are played back and in the next two tracings, as shown in FIGURE 20(c), only data corresponding to the areas i' and g are played back. Thus, there was the problem in that at the playbacks other then the normal speed mode playback and the five-times speed mode playback, only part of the frame was played back and no good quality playback picture could be obtained.

Thus, conventional variable length code recording/playback apparatus, as described above had such a problem that when intra-frame data were rearranged according to a prescribed speed mode playback the picture quality at a prescribed high speed mode forward direction playback was guaranteed but no good quality specialized playback picture could be obtained in the playbacks at other speeds and in the reverse direction.

The present invention therefore seeks to provide a variable length code recording/playback apparatus which is capable of improving picture quality at a reverse direction playback as well as a plurality of the specific speed mode playbacks.

In order to achieve the above object, a variable length code recording/playback apparatus according to one aspect of the present invention, which by encoding intra-frame data and inter-frame data in variable length code, records them as recorded codes on tracks of a prescribed recording medium and playbacks them, includes a data rearranger for recording the data in areas to be played back at least two specific speed mode playbacks on the tracks by rearranging prescribed data out of the data encoded in variable length code, a variable length decoder for playing back the data recorded on the recording medium and decoding them in variable length code, a data rearrangement canoeller for controlling and restoring the time series of the output of the variable length decoder to the original data train before the rearrangement, and a decoder for constructing a playback picture from the decoded outputs for several frames in the specific speed mode playback by decoding the output of this data rearrangment canceller.

For a better understanding of the present invention and many of the attendant advantages thereof reference will now be made by way of example to the accompanying drawings, wherein;
FIGURE 1 is an explanatory diagram for explaining the correspondence of the locations on the frame with the locations on a recording medium in a conventional example;
FIGURE 2 is an explanatory diagram showing the relationship between the tracing pattern and the playback envelop at triple-speed mode playback;
FIGURE 3 an explanatory diagram showing the construction of the recording/playback heads;
FIGURE 4 is an explanatory diagram for explaining the construction of the playback frame in a conventional example;
FIGURE 5 is an explanatory diagram for explaining the compression method according to H.261 recommendation;
FIGURE 6 is a block diagram showing the recording section of conventional variable length code recording/playback apparatus adopting the predictive encoding;
FIGURE 7 is an explanatory diagram for explaining the macro block;
FIGURE 8 is an explanatory diagram showing the data stream of recorded signals in the recorder shown in FIGURE 6;
FIGURE 9 is a block diagram showing the decoding section (the playback section) of a conventional variable length code recording/playback apparatus;
FIGURE 10 is an explanatory diagram for explaining a conventional example in which important data are concentrated in the playback areas in the specialized playback;
FIGURE 11 is an explanatory diagram for explaining the data arrangement in the conventional example shown in FIGURE 10;
FIGURE 12 is a block diagram showing the recording section of the conventional variable length code recording/playback apparatus realizing FIGURE 18;
FIGURE 13 is a block diagram showing the playback section of the conventional variable length code recording/playback apparatus realizing FIGURE 10;
FIGURE 14 is an explanatory diagram for explaining data to be recorded in specific arrangement areas;
FIGURE 15 an explanatory diagram showing correspondence between data and frame in FIGURE 14;
FIGURE 16 is an explanatory diagram for explaining the data stream shown in FIGURE 14;
FIGURE 17 is an explanatory diagram for explaining the recording state when corresponded to the five-times speed mode playback in the conventional examples in Figures 12 and 13;
Figure 18 is an explanatory diagram for explaining the operations according to the conventional example;
Figure 19 is an explanatory diagram for explaining problems according to the conventional example;
Figure 20 an explanatory diagram for explaining problems according to the conventional example;
Figure 21 is a block diagram showing a recording section of the recording/playback apparatus according to an embodiment of the present invention;
Figure 22 is a block diagram showing a playback section of the recording/playback apparatus according to the embodiment of the present invention;
Figure 23 is an explanatory diagram for explaining the operation of the apparatus according to the illustrated embodiment;
Figure 24 is another explanatory diagram illustrating the specific data arrangement according to the embodiment;
Figure 25 is still another explanatory diagram for explaining the operation of the apparatus according to the embodiment;
Figure 26 is a block diagram showing a modification of the recording section of the apparatus according to a further embodiment of the present invention;
Figure 27 is an explanatory diagram for explaining the operation of the modification of the recording section of the apparatus according to the further embodiment;
Figure 28 is a block diagram showing a modification of the playback section of the recording/playback apparatus according to the further embodiment of the invention;
Figure 29 is an explanatory diagram for explaining the operation of the modification of the playback section of the apparatus according to the further embodiment.

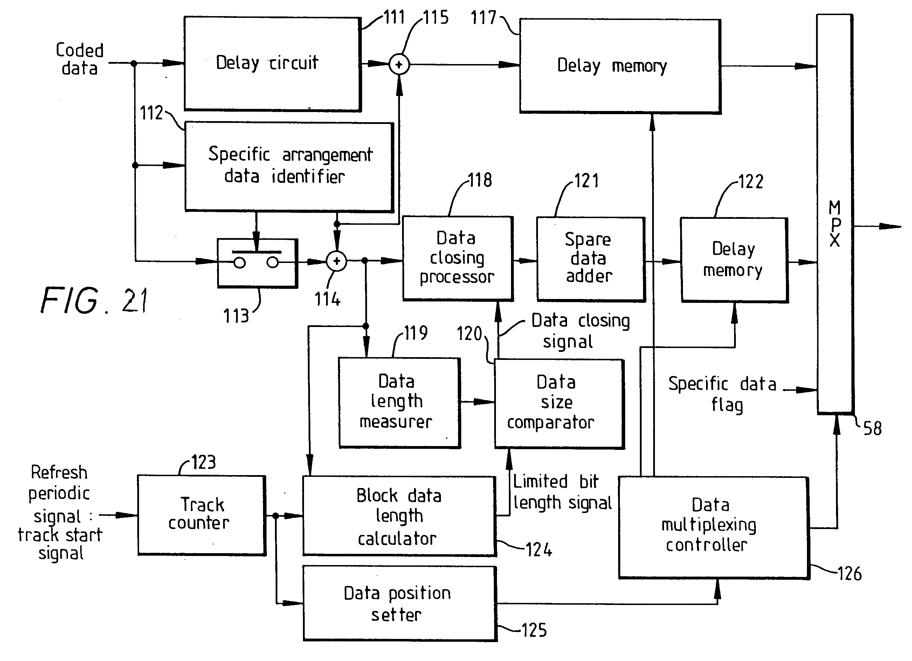

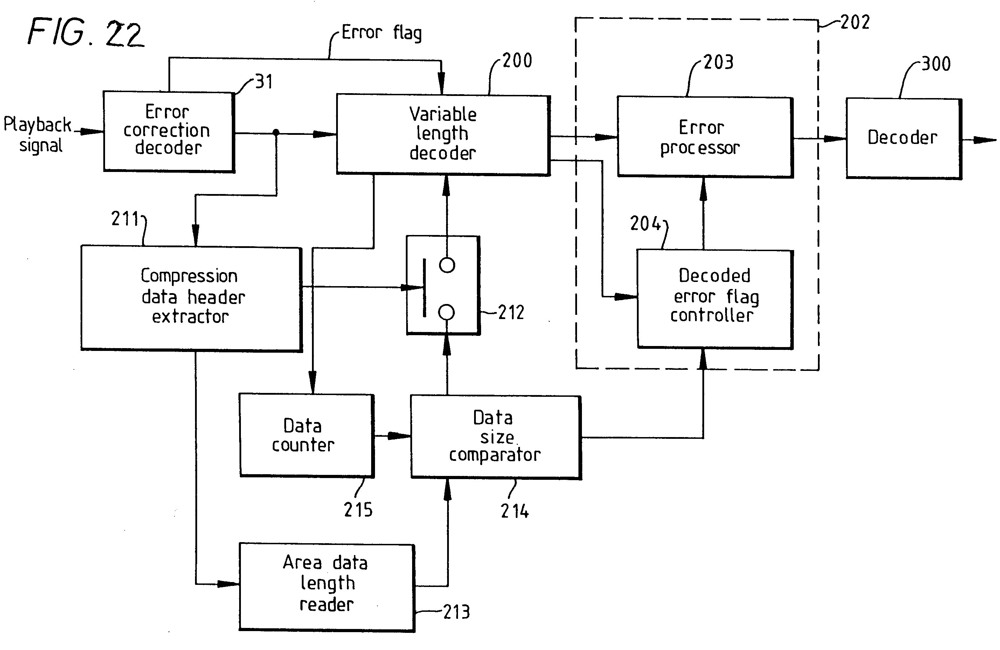

Figure 21 is a block diagram of an embodiment of the data rearrangement circuit used in the recording section of the recording/playback apparatus according to a third aspect of the invention. Figure 22 is a block diagram of an embodiment of the reproduction section (the decoding section) of the recording/playback apparatus according to the invention.

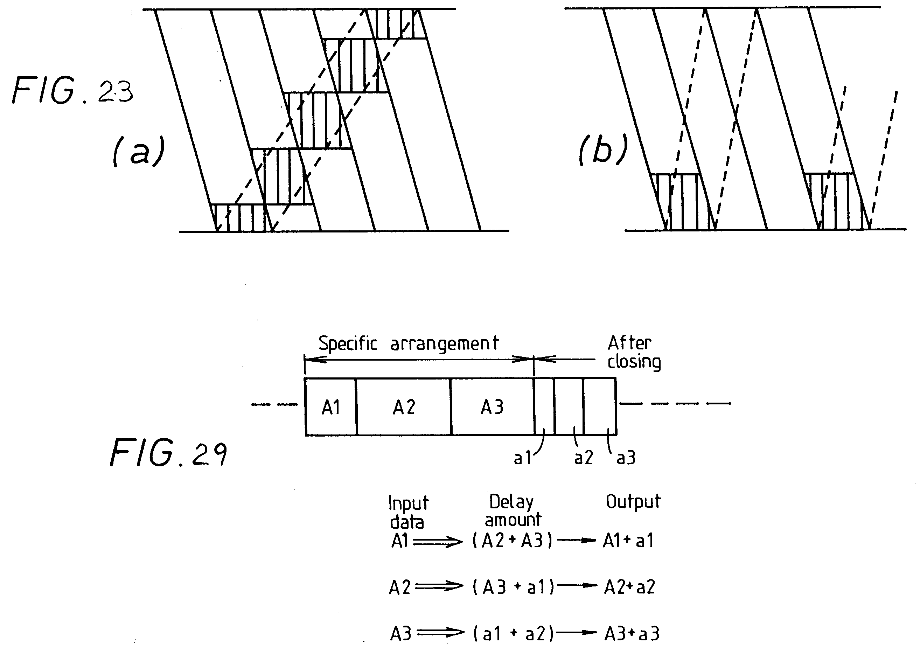

Figure 23(a) shows an example of the recording pattern for five-times speed mode playback, while Figure 23(b) shows an example of the recording pattern for triple speed mode playback. In this embodiment, important data such as, for instance, DC components or intra-frame data are recorded in the specific arrangement areas and further, they are recorded by reducing to the prescribed data volume so that all of them can be played back. In Figure 23(a), the hatched section shows that important data are recorded only in the specific arrangement area at the five-times speed mode playback. Figure 23(b) shows an example in which important data volume is reduced so that they are recorded only in the lowest recording track of the specific arrangement area at the triple speed mode playback.

In accordance with this aspect of the invention, the volume of important data is restricted to a volume which can be recorded in an area where they can be played back.

In Figure 21, the encoded data from the variable encoder 16 are fed to a delay circuit 111 and a specific arrangement data identifier 112 and also, to an adder 114 through a switch 113. The delay circuit 111 outputs the encoded data to an adder 115 by delaying them. The specific arrangement data identifier 112 identifies whether they are the data to be recorded in the specific arrangement area on the recording track of a recording medium (not shown) and gives the result of identification to the switch 113 and outputs data to the adders 114 and 115.

The switch 113 is controlled by the result of identification by the specific arrangement data identifier 112 and allows only the specific arrangement data out of the encoded data to pass to the adder 114. The adder 114 adds the data from the specific arrangement data identifier to the specific arrangement data and outputs them to a data closing processor 118 and a data length measurer 119. Further, the adder 115 adds these data to the encoded data from the delay circuit 111 and outputs them to a delay memory 117. The delay memory 117 executes the time adjustment and the record timing adjustment under the control of a data multiplexing controller 126, and outputs input data to the MPX 58.

The data length measurer 119 sequentially counts an input data length for each block (the luminance block or the color difference block) of the specific arrangement data, and outputs the result of count to a data size comparator 120. The size comparator is also supplied with a limited bit length signal which is described later, and compares it with the data length signal and outputs a data closing signal to the data closing processor 118 when the counted length reaches the limited bit length. The data closing processor 118 outputs the output of the adder 114 sequentially to a spare data adding circuit 121 until the data closing signal is input. After the data closing signal is generated, data output is stopped and not recorded. If a macro block data length of the specific arrangement data is shorter than the prescribed bit length, the spare data adding circuit 121 adds redundant bits and outputs the fixed length data to a delay memory 122. The delay memory 122 outputs input data to the MPX 58 according to a recording timing under the control of the data multiplexing controller 126.

The limited bit length signal is calculated such that the lengths of the blocks of specific arrangement data are able to be recorded in the specific arrangement areas. As shown in Figure 23(a), the length of this area is less in the first and fifth track of each group of five than in the second, third and fourth tracks.

These lengths are calculated by a block data length calculator 124. Track start signals showing a refresh period signal are supplied to a track counter 123. The track counter 123 counts the track start signals and outputs a track number showing whether the recording track is the first track or the fifth track to the block data length calculator 124 and a data position setter circuit 125. The block data length calculator 124 calculates the limited bit lengths and outputs them to the data size comparator 120. Further, the data position setter circuit 125 outputs a timing signal to a data multiplexing controller 126. The data multiplexing controller 126 controls the readout from the delay memories 117 and 122 based on the timing signal from the data position setter circuit 125, and gives the encoded data and the specific arrangement data to the MPX 58. The MPX 58, under the control of the data multiplexing controller 126, arranges the encoded data and the specific arrangement data so that they are recorded, for instance, as shown by the hatched section in Figure 23(a).

In the playback section, the playback signal from a recording medium (not shown) is input to the error correction decoder 31 as shown in Figure 22. The error correction decoder 31 corrects errors of the playback signal and outputs it to a variable length decoder 200 and a compression data header extractor 211. Further, the error correction decoder 31 transmits the errors left uncorrected with an error flag added. The variable length decoder 200 decodes the playback data and outputs them to a data counter 215.

The compression data header extractor 211 extracts the header signal and judges whether the playback data are the specific arrangement data, and outputs the header signal to an area data length reader circuit 213 and at the same time, controls a switch 212 based on the result of judgement. The switch 212 is turned OFF when the result of judgement shows that the playback data are not the specific arrangement data, while it is turned ON when the playback data are the specific arrangement data.

The area data length reader circuit 213 obtains a length signal and outputs it to the data size comparator 214. On the other hand, the data counter 215 counts decoded data length from the start of the decoding and outputs it to the size comparator 214. When the decoded data length from the data counter 215 reaches the expected length, the size comparator 214 outputs a decode reset signal to the variable length decoder 200 through the switch 212. The variable length decoder 200 decodes the playback data in variable length and when the decode reset signal is input, resets the decoding operation. By the decode reset signal, the variable length decoder 200 is enabled to decode the next block data in variable length. Further, undecoded data are discarded in the course of decoding process and data up to data decoded immediately before the decode reset signal input are supplied as valid data to an error processor 203 and a decoded error flag controller 204 of an error processing section 202.

If the error flag is added to the output of the variable length decoder 200, the decode error flag controller 204 controls the error processor 203 to skip error propagated data so that the error generated data will not be supplied to the decoder 300. The decoder 300 decodes and outputs data which have been decoded in variable length through the reverse quantization process, the reverse DCT process and the predicted decoding process.

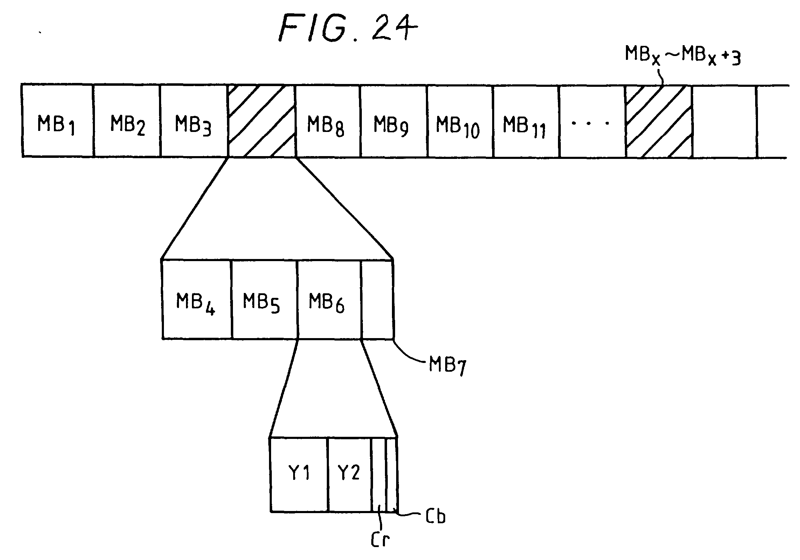

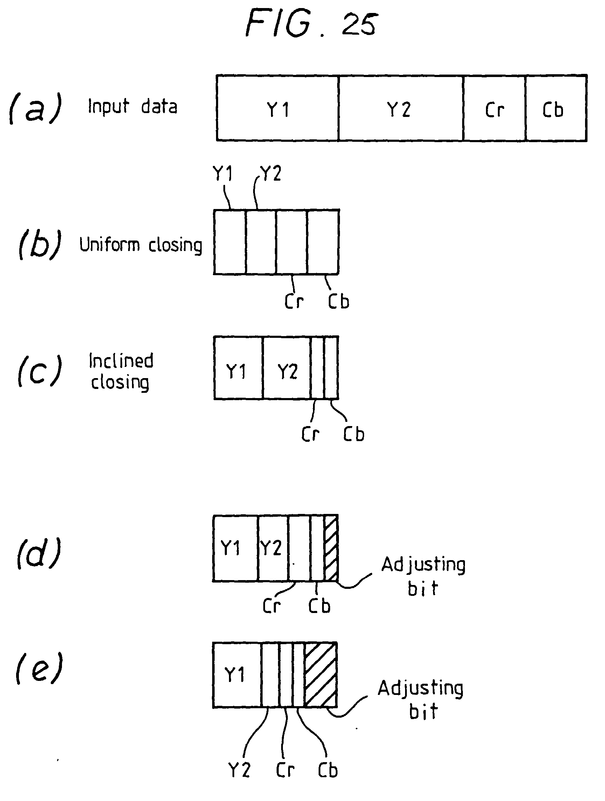

Figure 24 is a diagram for explaining the specific arrangement data and Figure 25 is a diagram for explaining the limited bit length.

In Figure 24, it is assumed that the hatched macro blocks MB₄-MB₇ and MBₓ-MBₓ₊₃ out of a series of macro blocks MB shown in Figure 24 are specific arrangement data. Further, each of the macro blocks is composed of the luminance block Y1 and Y2 and the color difference blocks Cr and Cb.

Now, it is assumed that a data length of each block of input encoded data is as illustrated in Figure 25(a). If the assignment to each block is uniformly set up, data of each block are output with data volumes as shown in Figure 25(b) from the data closing processor 118. Alternatively, an inclined allocation may be made to increase the assignment to the luminance blocks Y, and data blocks with the volumes shown in Figure 25(c) may be output from the data closing processor 118.

If the data volume of each macro block has not reached a prescribed data length, the spare data adding circuit 121 outputs a fixed length data to the delay memory with a redundant adjusting bit added. For instance, as illustrated in Figures 25(d) and 25(e), if the data lengths are less than the limited bit length, an adjusting bit which does not alter the decoding is added to the data as shown by hatching.

As described above, in this embodiment the intra-frame data are recorded in the specific arrangement area by closing them in units of blocks up to the volume that is recordable in the specific arrangement area, and at the normal playback, a normal playback picture is obtained by decoding data recorded in areas other than the specific arrangement area.

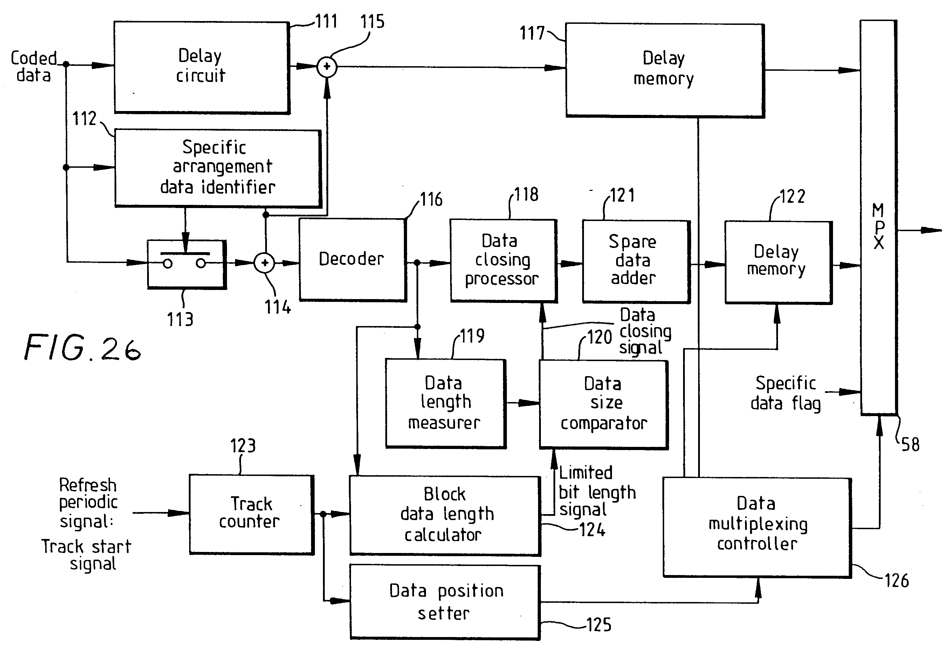

Figure 26 is a block diagram showing the second embodiment of the invention. In Figure 26, the same components as those in Figure 21 are assigned with the same reference numerals and the explanations thereof are omitted. This embodiment is to execute the data closing process after decoding the specific arrangement data.

This embodiment differs from that shown in Figure 21 in that the output of the adder 114 is given to the data closing processor 118, the data length measurer 119 and the block data length calculator 124 through a decoding circuit 116. The decoding circuit 116 is able to output the decoded data of the specific arrangement data from the adder 114.

In this embodiment, the decoding circuit 116 sequentially decodes the specific arrangement data and outputs them to the data closing processor 118, the data length measurer 119 and the block data length calculator 124. Then, the data closing processor 118 executes the data closing process. Thus, the specific arrangement data before decoding are output from the data closing processor 118.

As a result, in the playback section, data can be played back in the same circuits as in the conventional apparatus.

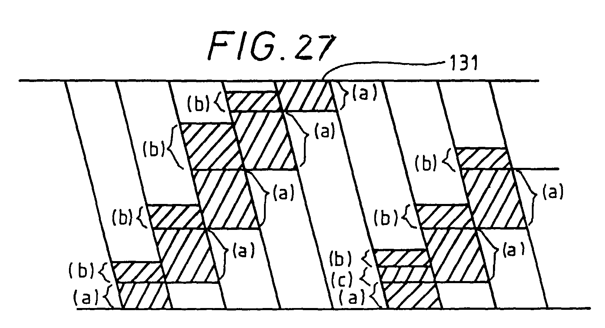

Figure 27 is a diagram for explaining the invention.

In the embodiment illustrated in Figures 21 and 22, specific arrangement data only are used at the specialized playback. In the embodiment illustrated with reference to Figure 27, the specific arrangement data are also usable at the normal playback by decoding them. Therefore, the data out of the specific arrangement data, which were discarded in the embodiment shown in Figures 21 and 22, are recorded in areas other than the specific arrangement areas. That is, the hatched section (a) in Figure 27 shows the specific arrangement area in which the specific arrangement data up to the data closing are recorded. In the hatched section (b) in Figure 27, data after the data closing are recorded. The area of the hatched section (b) is unlimited. Data after the closing of the specific arrangement data which are to be recorded in the specific arrangement area 131 of the fifth track may be recorded in the area in front of the specific arrangement area 131 or the area next to the specific arrangement area of the next track as illustrated in the hatched section (c) in Figure 27.

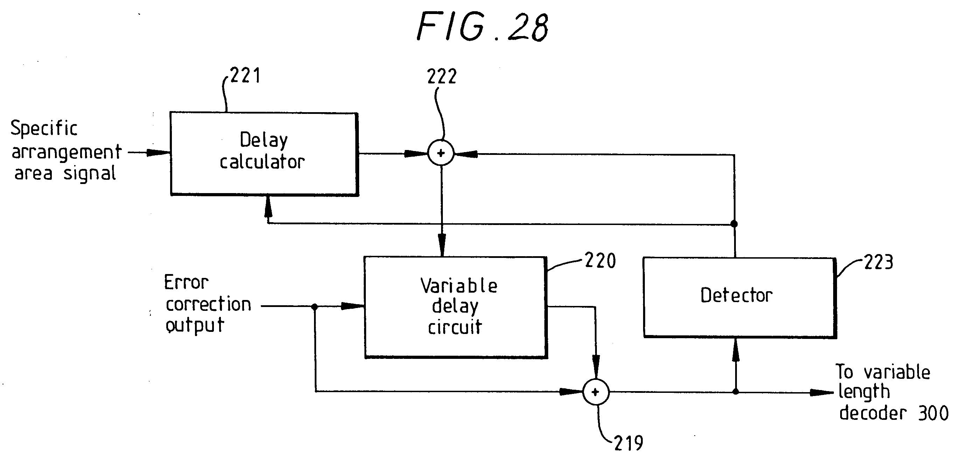

Figure 28 is a block diagram showing the playback section for use with the embodiment illustrated with reference to Figure 27.

This embodiment differs from the embodiment shown in Figure 22 in that the circuit illustrated in Figure 28 is added before the variable length decoder 200. The error correction output from the error correction decoder 31 (see Figure 22) is given directly to an adder 219 and also, to the adder 219 through a variable delay circuit 220. The variable delay circuit 220, under the control of a delay amount control signal from an adder 222, delays the error correction output and outputs it to the adder 219. The adder 219 adds the error correction output to the delayed output and outputs the result to the variable length decoder 300 and to a detector 223. The detector 223 detects which block data are input to the variable length decoder 300 from the output of the adder 219 and outputs the result of detection to a delay calculator 221 and also, outputs data length of the data after the data closing to an adder 222.

The delay calculator 221 is also supplied with a specific arrangement area signal showing the area length of the specific arrangement area. The delay calculator 221 obtains a delay amount from the specific arrangement area signal and an input block, and outputs it to the adder 222. The adder 222 controls the variable delay circuit 220 by generating a delay amount control signal based on the output of the delay calculator 221 and the result of detection of the detector 223.

The operation of this circuit will be explained with reference to the diagram shown in Figure 29. Figure 29 shows the playback data in the specific arrangement area and the playback data in the area next to the specific arrangement area.

It is assumed that, when recording data, data blocks A1 to A3 up to the data closing have been recorded in the specific arrangement area. Data blocks A1 to A3 were closed during recording and data a1 to a3 after the data closing have been recorded in the area next to the specific arrangement area. As illustrated in Figure 29, the data up to the data closing and the data after the data closing are discontinuous at the normal playback, and the data are played back sequentially in order of A1, A2, A3 and a1, a2, a3.

As shown in Figure 29, data a1 are recorded later by an amount (A2+A3) compared with A1, data a2 are recorded later by an amount (A3+a1) compared with A2, and data a3 are recorded later by an amount (a1+a2) compared with A3. The circuitry of Figure 28 introduces delays such that the data (A1+a1), (A2+a2) and (A3+a3) are output together.

The error correction output of the block data A1 is supplied from the error correction decoder 31 to the adder 219. The detector 223 detects that the block data A1 has been input and outputs the detection result to the delay calculator 221 and the adder 222. The delay calculator 221 calculates the delay amount in this case (A2 + A3) by subtracting the data length of data A1 from the data length ($\text{A1 + A2 + A3}$) of the specific arrangement area and outputs it to the variable delay circuit 220 through the adder 222. The variable delay circuit 220 outputs the data A1 to the adder 219 after delaying it by (A2 + A3). Thus, the data A1 and the data a1 become continuous in the adder 219 and they are supplied to the variable length decoder 300.

This data length a1 is given from the detector 223 to the adder 222. For the data A2, the delay amount A3 is given from the delay calculator 221 to the adder 222. The adder 222 adds up the output of the delay calculator 221 with the output of the detector 223 and outputs a delay control signal showing the delay amount (A3 + a1) to the variable delay circuit 220. The data A2 is supplied to the adder 219 after a delay of (A3 + a1), and the adder 219 composes the data A2 and a2 and outputs the resulting data to the variable length decoder 300. Thereafter, the playback is executed by repeating the same operation.

As described above, in this embodiment, at the specialized playback, a playback picture is composed by playing back the specific arrangement data recorded in the specific arrangement area, while, during normal playback, all data are played back and a playback picture is composed. Therefore, it is possible to improve the picture quality during normal playback compared with the embodiment shown in Figures 21 and 22.

## Claims

1. A recording apparatus comprising:
means for arranging a predetermined part of high efficiency coded signals on tracks of a tape at a prescribed position on each of said tracks on a trace line of a magnetic playback head such that said prescribed position of each track is cyclically shifted along said tape from a prescribed position in an adjacent track at a cycle associated with at least one specific high speed reproducing operation of a forward or reverse direction;
means for limiting a data length of said predetermined part of high efficiency coded signals and outputting limited data, said data length varying for different specific high speed reproducing operations;
means for adding spare data to said limited data so as to equal said fixed recording capacity; and
means for recording said high efficiency coded signals on said tape.

2. A recording apparatus as claimed in claim 1, wherein said predetermined part of said high efficiency coded signals is comprised of a DC component of every data block.

3. A recording apparatus as claimed in claim 1, wherein said predetermined part of said high efficiency coded signals is comprised of a DC component and a prescribed number of AC components of every data block.

4. A recording apparatus as claimed in claim 1, wherein said predetermined part of said high efficiency coded signals is comprised of a DC component and a maximum amount of AC components of every data block recordable on a corresponding record area.

5. A recording apparatus as claimed in claim 1, wherein said predetermined part of said high efficiency coded signals is recorded without a decoding process, by being closed at a data position corresponding to a record track length assigned for said predetermined part of said high efficiency coded signal.

6. A recording apparatus as claimed in claim 1, wherein said predetermined part of said high efficiency coded signals is recorded without a decoding process, by being closed at an end of its effective data length.

7. A recording apparatus as claimed in claim 1, wherein said predetermined part of said high efficiency coded signals is data length limited to an amount that is recordable on areas associated with the specific speed reproducing operation.

8. A recording apparatus as claimed in claim 1, further comprising:
means for arranging said high efficiency coded signals on normal tracks so that image data is reproduced at a normal speed reproducing operation without utilizing said predetermined parts of said high efficiency coded signals, while image data is reproduced at a specific high speed reproducing operation utilizing said predetermined parts of said high efficiency coded signals.

9. A recording apparatus as claimed in claim 1, further comprising:
means for receiving said high efficiency coded signals from an external medium.

10. A recording apparatus as claimed in claim 9, wherein said receiving means comprises means for extracting said high efficiency coded signals at every end of variable length code signal.

11. A recording apparatus as claimed in claim 1, further comprising:
means for generating said high efficiency coded signals through a high efficiency encoding process.

12. A recording apparatus as claimed in claim 1, wherein said prescribed position has a fixed recording capacity.

13. A recording apparatus comprising:
means for arranging a predetermined part of high efficiency coded signals on tracks of a tape at a prescribed position on each of said tracks on a trace line of a magnetic playback head such that said prescribed position of each track is cyclically shifted along said tape from a prescribed position in an adjacent track at a cycle associated with at least one specific high speed reproducing operation of a forward or reverse direction;
means for arranging said high efficiency coded signals on normal tracks so that image data is reproduced at a normal speed reproducing operation without utilizing said predetermined parts of said high efficiency coded signals, while image data is reproduced at a specific high speed reproducing operation utilizing said predetermined parts of said high efficiency coded signals; and
means for recording said high efficiency coded signals on said tape.

14. A recording apparatus, comprising means for encoding data, and recording the encoded data in tracks on a recording medium, prescribed data out of the encoded data being recorded in specific areas of said tracks, such that they may be played back during a specific speed playback operation, characterised in that the apparatus further comprises:
means for limiting the length of the prescribed data to the length of the specific area; and
means for recording the limited prescribed data in the specific areas.

15. Apparatus as claimed in claim 14, further characterised in that the apparatus comprises a decoder provided before the means for limiting the length of the prescribed data.

16. A playback apparatus comprising means for reading data from tracks on a tape, the data having been stored such that certain specific data have been stored in prescribed areas on the track, the apparatus further comprising:
a variable delay circuit (220), for delaying certain parts of the input signal;
a delay calculator (221), for calculating the size of the delay to be applied to the different parts of the input signal, and controlling the variable delay circuit (220), such that the original order of the signal before storage is restored.
